# EUROPÄISCHE PATENTSCHRIFT

(11) **EP 2 009 359 B1**
(45) Veröffentlichungstag und Bekanntmachung des Hinweises auf die Patenterteilung: **14.09.2016**
(21) Anmeldenummer: 08011307.9
(22) Anmeldetag: 21.06.2008
(51) Int. Cl.: F24D 19/10

(54) **Verfahren zum Betrieb einer solarthermischen Anlage**
Method for operating a solar-thermal facility
procédé de fonctionnement d'une installation thermique solaire

(30) Priorität: 29.06.2007 DE 102007030363; 27.08.2007 AT 13282007
(43) Veröffentlichungstag der Anmeldung: 31.12.2008
(73) Patentinhaber: Vaillant GmbH, 42859 Remscheid (DE)
(72) Erfinder: Langer, Jens, 42349 Wuppertal (DE); Severin, Sascha, 44289 Dortmund (DE)
(74) Vertreter: Hocker, Thomas

(56) Entgegenhaltungen:
- EP-A2- 1 467 155
- DE-A1- 2 907 657
- DE-A1- 19 643 530
- DE-U1- 20 103 062
- DE-U1- 29 722 530
- FR-A1- 2 496 847
- FR-A3- 2 545 587

## Beschreibung

Die Erfindung bezieht sich auf ein Verfahren zum Betrieb einer solarthermische Anlage.

Ein Verfahren gemäß dem Oberbegriff von Anspruch 1 ist aus dem Dokument FR2496847 bekannt.

Eine solarthermische Anlage besteht grundsätzlich aus Solarkollektoren, welche die Sonnenenergie einfangen und an ein Wärmeträgermedium (z.B. Wasser-Glykol, Wasser-Ethanol oder Wasser) abgeben, einem oder mehrere Speicher und einem geschlossenen Kreislauf, der die im Solarkollektor aufgenommene Wärme zum Speicher transportiert, einer Regelung, die die Umwälzung des Wärmeträgermediums (Sole), bei entsprechenden Temperaturdifferenzen von dem Solarkollektor zum Speicher steuert. Die Sole wird durch die Sonnenstrahlung im Solarkollektor erwärmt und dann über den Solekreislauf dem Speicher zugeführt. Anschließend kann die Sonnenwärme zum Beispiel zur Warmwasserbereitung, Heizungsunterstützung oder Schwimmbaderwärmung genutzt werden.

Meistens ist ein einfacher Temperaturdifferenzregler für die Regelung einer kleinen solarthermischen Anlage zur Warmwasserbereitung ausreichend. Der Regler stellt über zwei Temperaturfühler fest, wann die Temperatur am Kollektoraustritt höher als die auf der Höhe des Solarkreis-Wärmetauschers gemessene Temperatur im Speicher ist und setzt daraufhin die Solarkreis-Umwälzpumpe in Betrieb. Üblicherweise werden die Solarregler so eingestellt, dass eine Temperaturdifferenz von etwa 5 - 8 K zwischen dem Solarkollektor und dem Speicher für den Pumpenstart gewährleistet ist. Sinkt diese üblicherweise um 2 bis 3 K ab, wird die Umwälzpumpe durch den Solarregler wieder außer Betrieb genommen. Trotz dieser Einstellung des Solarreglers können Probleme beim Start der Anlage auftreten, in dem die Anlage gar nicht startet oder zu früh abschaltet. So gelangt nach dem Pumpenstart kalte Flüssigkeit in den Solarkollektor, die diesen durchströmt und erhitzt wieder verlässt. Demzufolge fällt die Temperatur im Kollektor wieder rapide ab. Aufgrund der nun vorliegenden Temperaturdifferenz kann es gemäß dem Stand der Technik zum Abschalten der Pumpe kommen. Läuft die Pumpe weiter, so steigt die Temperatur wieder an, da die heiße Flüssigkeit, welche beim Pumpenstart im Solarkollektor verweilte, nach dem Durchströmen des Speichers wieder in den Solarkollektor einströmt. Erst nach einigen Umwälzungen stellt sich ein quasi-stationärer Zustand ein.

Ein weiteres Problem bei herkömmlichen solarthermischen Anlagen besteht darin, dass die Hydraulik- und die Reglerkomponenten nicht in einer Baueinheit angeordnet sind und daher eine Vorverdrahtung der Anlage zur Erleichterung der Montage nur teilweise möglich ist.

Aus FR 2496847 ist eine solarthermische Anlage mit einem Kreislauf, in dem sich ein Solarkollektor sowie ein Speicher bekannt. Ein Umschaltventil in diesem Kreislauf erlaubt die Umgehung des Speichers. Die Umschaltung erfolgt mittels der Messwerte zweier Temperatursensoren in der Vor- und Rücklaufleitung.

Der Erfindung liegt die Aufgabe zugrunde, ein gegenüber dem Stand der Technik verbessertes Verfahren für eine solarthermische Anlage zur Verfügung zu stellen, wodurch die Installation der solarthermischen Anlage vereinfacht und der Betrieb optimiert wird.

Erfindungsgemäß wird dies gemäß den Merkmalen des Anspruchs 1 mit einem Verfahren zum Betrieb einer solarthermischen Anlage gelöst, bei dem das zu erwärmende Wärmeträgermedium mittels einer Pumpe in einem Kreislauf zwischen einer Speichervorrichtung und mindestens einem Solarkollektor über eine Vorlauf- und eine Rücklaufleitung befördert wird, wobei die Vorlauf- und die Rücklaufleitung über ein Umschaltventil und eine Bypassleitung verbindbar sind, mit einem ersten Temperatursensor angeordnet zwischen dem Solarkollektor und dem Speicher in der Vorlaufleitung stromab des Solarkollektors sowie einem zweiten Temperatursensor in der Rücklaufleitung mit folgenden Verfahrensschritten:
- nach dem Start der Pumpe ist das Umschaltventil derart geschaltet, dass das Wärmeträgermedium über die Vorlaufleitung, die Bypassleitung und die Rücklaufleitung zum Solarkollektor strömt,
- die mittels des ersten Temperatursensors gemessene Temperatur T₁ wird erfasst,
- überschreitet die gemessene Temperatur T₁ einen vordefinierten Temperaturwert T_{L}, so wird das Umschaltventil derart umgeschaltet, dass das Wärmeträgermedium vom Solarkollektor zum Speicher anstelle durch die Bypassleitung strömt,
- eine mittels des zweiten Temperatursensors gemessene Temperatur T₂ wird dann nach einer festgelegten Zeit t₁ erfasst,
- die Differenz ΔT der erfassten Temperaturwerte T₁ und T₂ wird gebildet,
- wenn die Temperaturdifferenz ΔT kleiner eines vorgegebenen Wertes ΔT_{Stop} ist, wird die Pumpe abgeschaltet.

Hierzu ist vorteilhafterweise eine Solarstation zum Anschluss mindestens eines Solarkollektors und eines Speichers derartig aufgebaut, dass sie in einer einzigen Baueinheit eine Regelung und Vorlauf- und Rücklaufleitungen enthält, wobei Temperaturfühler in jeder der Leitungen und eine Pumpe in einer der Leitungen angeordnet sind.

Bei der solarthermischen Anlage sind die einzelnen Hydraulikkomponenten, Aktoren, Sensoren und Regler örtlich in einer Solarstation zusammengelegt, so dass eine Vorverdrahtung der Solarstation ab Werk möglich ist. Somit wird die Installationszeit weitgehend auf den hydraulischen Anschluss des Solarkollektors und des Warmwasserspeichers reduziert und eventuelle Fehler während der Installation vermieden. Weiterhin werden die Wartung und die Instandsetzung der Anlage vereinfacht.

Besonders vorteilhaft durch die Anordnung des Kollektorfühlers in der Solarstation ist die vereinfachte elektrische und hydraulische Installation der Anlage. Diese resultiert aus der Position des Kollektorfühlers im Vorlauf der solarthermischen Anlage, wodurch ein eventuelles Vertauschen der Vor- und Rücklaufleitung zum bzw. vom Kollektor bei der Installation keine Auswirkung auf den Temperaturfühler hat. Der Temperaturfühler ist immer im Vorlauf der Solarstation angeordnet und wird immer von einer Flüssigkeit durchströmt, die erst durch den Kollektor geströmt ist, d.h. vorgewärmt ist. Eine Auswirkung auf das Verhalten der Regelung, durch vertauschte Vor- und Rücklaufleitungen, ist damit ausgeschlossen.

Bei einer Solaranlage nach dem Stand der Technik hingegen führt das Vertauschen der Vor- und Rücklaufleitungen zu erheblichen Problemen. Zunächst wird ein Erwärmen im Kollektor durch die Sonnenstrahlung von dem Kollektorfühler registriert und die Pumpe wird gestartet. Durch die vertauschten Vor- und Rücklaufleitungen gelangt kaltes Wärmeträgermedium direkt aus dem Rücklauf zum Kollektorfühler ohne vorher das Kollektorfeld durchströmt und sich dabei erwärmt zu haben. Die Anlage schaltet wegen einer zu geringen Temperaturdifferenz zwischen Vorlauf- und Rücklauftemperatur ab.

Mit der erfindungsgemäßen Anordnung des Temperaturfühlers wird ein solches Verhalten verhindert.

Mit dem erfindungsgemäßen Verfahren werden Anlagenstarts vermieden, die zu keinem anschließend längeren Pumpenlauf und somit immer zu einer Speicherkühlung führen.

Die Installation und somit die Fehleranfälligkeit der Anlage werden einerseits durch eine einfache Bedieneroberfläche mit möglichst wenigen notwendigen Einstellmöglichkeiten, andererseits durch eine Reduzierung der elektrisch und hydraulisch zu installierenden Komponenten erreicht.

Weiterhin erfolgt die Temperaturerfassung des Solarkreisvorlaufs und -rücklaufs im System möglichst nah am zu beladenden Solarspeicher, so dass eine effiziente Energieeinlagerung in den Solarspeicher gewährleistet werden kann.

Weitere vorteilhafte Ausgestaltungen der Erfindung ergeben sich aus den Merkmalen der abhängigen Ansprüche und der Beschreibung. Die Erfindung wird nun anhand der Figuren näher erläutert. Hierbei zeigen
- Figur 1: eine solarthermische Anlage nach dem Stand der Technik,
- Figur 2: eine solarthermische Anlage nach einem ersten Ausführungsbeispiel,
- Figur 3: eine solarthermische Anlage nach einem zweiten Ausführungsbeispiel,
- Figur 4: eine solarthermische Anlage nach einem dritten Ausführungsbeispiel und
- Figur 5: eine solarthermische Anlage nach einem vierten Ausführungsbeispiel.

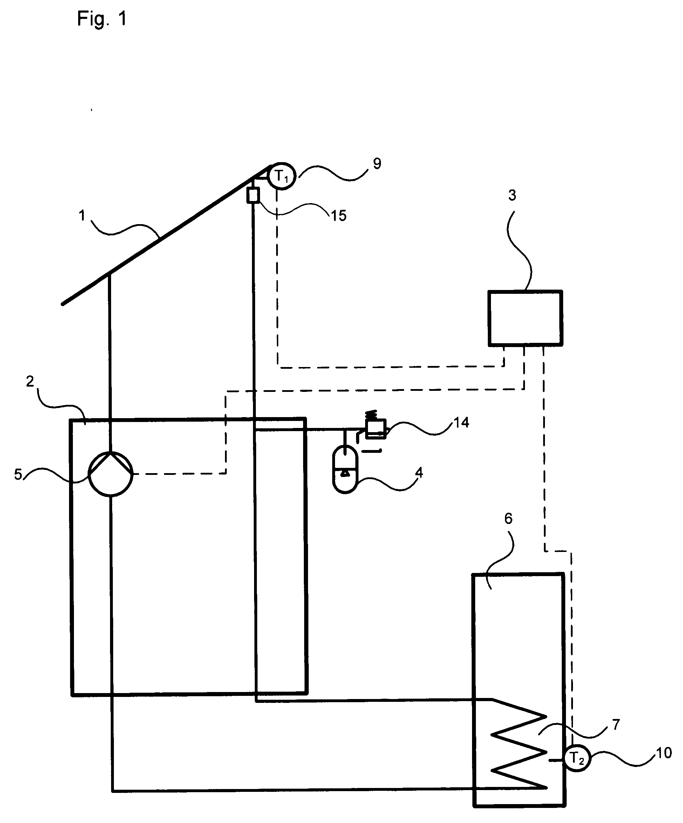

Figur 1 zeigt eine solarthermische Anlage aus dem Stand der Technik, die sich im Wesentlichen aus einem Solarkollektor 1, einer Solarstation 2, einem Regler 3, einem Ausdehnungsgefäß 4, einer Pumpe 5, einem Speicher 6 und einem Wärmetauscher 7 zusammensetzt. Eine Temperaturmessung T₂ am Speicher 6 erfolgt mittels Temperaturfühler 10 bzw. eine Temperaturmessung T₁ am Solarkollektor 1 erfolgt mithilfe des Temperaturfühlers 9.

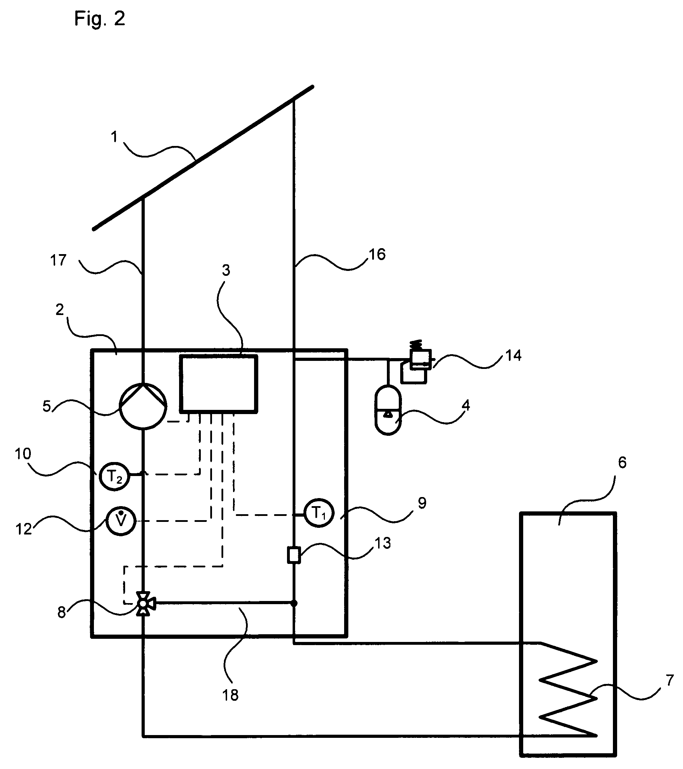

Die in Figur 2 dargestellte solarthermische Anlage zur Durchführung des erfindungsgemäßen Verfahrens zeigt eine Solarstation 2, an welche ein Solarkollektor 1 und eine Speichervorrichtung 6 angeschlossen sind. Die Solarstation 2 beinhaltet in einer Baueinheit eine Vorlaufleitung 16 und eine Rücklaufleitung 17. Zwischen der Vorlaufleitung 16 und der Rücklaufleitung 17 befindet sich eine Bypassleitung 18. Ein Umschaltventil 8 in der Rücklaufleitung 17 kann derart umgeschaltet werden, dass der Solarkollektor 1 entweder mit der Bypassleitung 18 oder mit der Speichervorrichtung 6 verbunden wird. In der Rücklaufleitung 17 befindet sich ferner eine Pumpe 5 und ein Temperaturfühler 10. Im Vorlauf befindet sich ein Temperaturfühler 9. Prinzipiell könnten sich das Umschaltventil 8 und / oder die Pumpe 5 auch in der Vorlaufleitung 16 befinden.

In einer ersten Stellung des Umschaltventils 8, wird der Speicher 6 sowie der Solarkollektor 1 wie bei einer gewöhnlichen Anlage von der Solarflüssigkeit durchströmt, in einer weiteren Stellung wird der Speicher 6 über die Bypassleitung 18 umgangen und nur den Solarkollektor 1 durchströmt, so dass die Solarflüssigkeit durch die Pumpe nur durch den Solarkollektor 1 und nicht durch den Speicher 6 gepumpt wird. Eine Speicherladung findet in diesem Zustand nicht statt, eine Kollektortemperaturmessung ist aber in dieser Phase in der Solarstation 2 möglich. Somit kann der bei herkömmlichen solarthermischen Anlagen übliche Solarkollektorfühler für die Temperaturmessung am Solarkollektor entfallen.

Beim Start der Pumpe 5 befindet sich das Umschaltventil 8 in der Stellung, in der die Solarflüssigkeit nicht durch den Speicher 6, sondern durch die Bypassleitung 18 gepumpt wird. Erst nachdem die mittels des Temperaturfühlers 9 gemessene Temperatur eine vorgegebene Temperatur T_{L} im Vorlauf überschreitet, schaltet das Umschaltventil 8 auf Speicherladung um. Somit findet keine unnötige Abkühlung im Speicher 6 statt.

Nach der Umschaltung wird nach einer gewissen Zeitspanne die Rücklauftemperatur des Speichers 6 in der Solarstation 2 gemessen, indem die mittels Temperaturfühler 10 gemessene Temperatur erfasst wird. Da der Speicher 6 ein sehr träges Temperaturverhalten aufweist, kann über die Rücklauftemperatur, welche in der Solarstation 2 gemessen wird, die Abschaltung der Pumpe 5 realisiert werden. Die Abschaltung der Pumpe 5 ist zum einen von der Differenz zwischen der Kollektortemperatur T₁ (Vorlauf) und der Speichertemperatur T₂ (Rücklauf) abhängig, und zum anderen - von dem absoluten Wert der gemessenen Temperatur.

Alle vorher fest gelegten Werte können bei einer selbstlernenden Regelung auch während des Betriebs automatisch optimiert werden.

Ein Start der Pumpe 5 wird mit der erfindungsgemäßen Solarstation 2 in vordefinierten zeitlichen Abständen durchgeführt, um die entsprechende Vorlauftemperatur in der Solarstation 2 messen zu können. Bei einem solchen Start wird den Solarkollektor 1 mit der Solarflüssigkeit durchströmt. Eine anschließende mögliche Speicherladung wird von der Regelung 3 überprüft. Hierbei kann eine gewisse Mindestlaufzeit der Pumpe 5 beachtet werden, damit das gesamte System für eine gewisse Zeit durchspült wird.

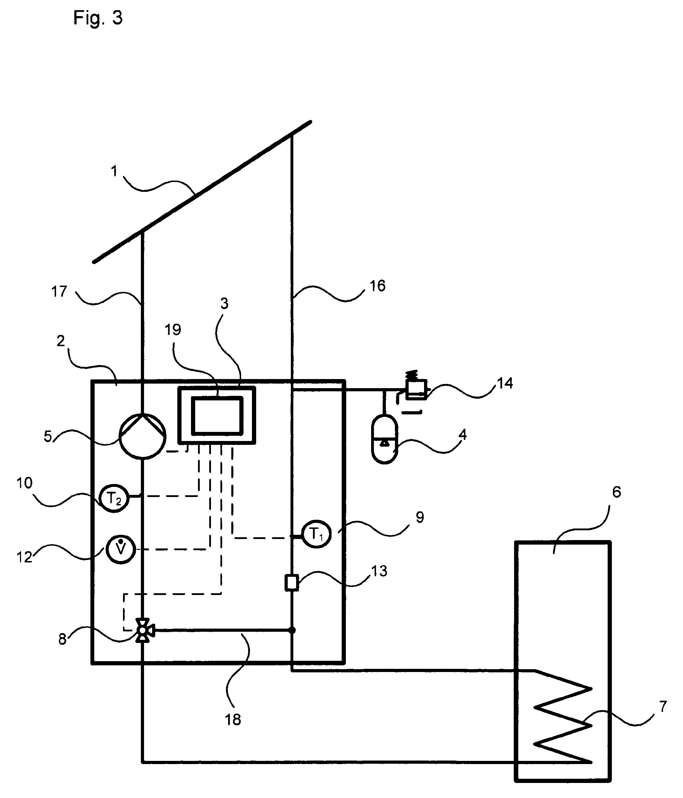

In Figur 3 ist eine solarthermische Anlage nach einem weiteren Ausführungsbeispiel dargestellt, bei der zusätzlich zur solarthermischen Anlage aus der Figur 2 diverse Einstellungen mittels einer Bedieneinheit mit Displays 19 integriert in der Solarstation 2 vorgenommen und angezeigt werden können.

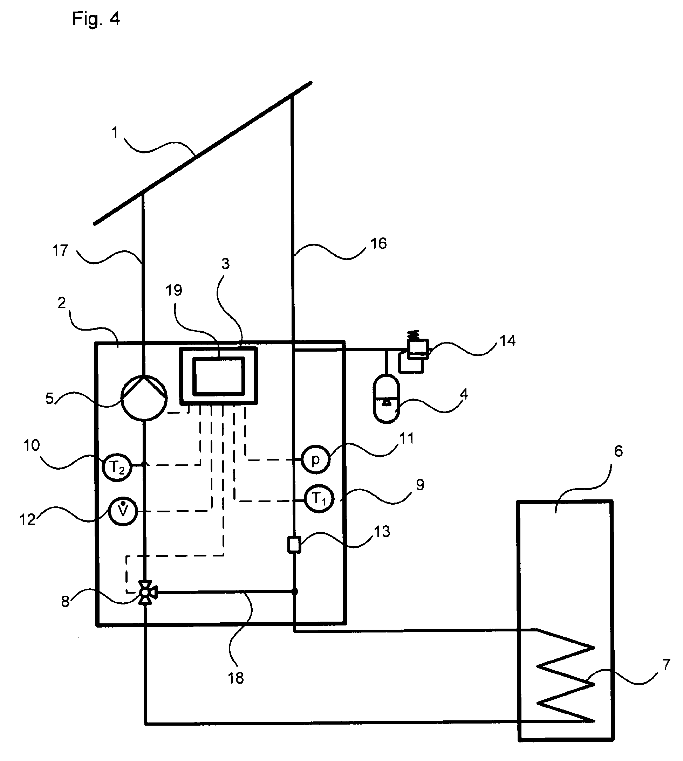

Die solarthermische Anlage in der Figur 4 verfügt zusätzlich zu der Bedieneinheit mit Display 19 über einen Drucksensor 11, wobei beide in der Solarstation 2 integriert sind. Mit dem Drucksensor 11 können Druckmessungen zur Erhöhung der Betriebssicherheit vorgenommen werden.

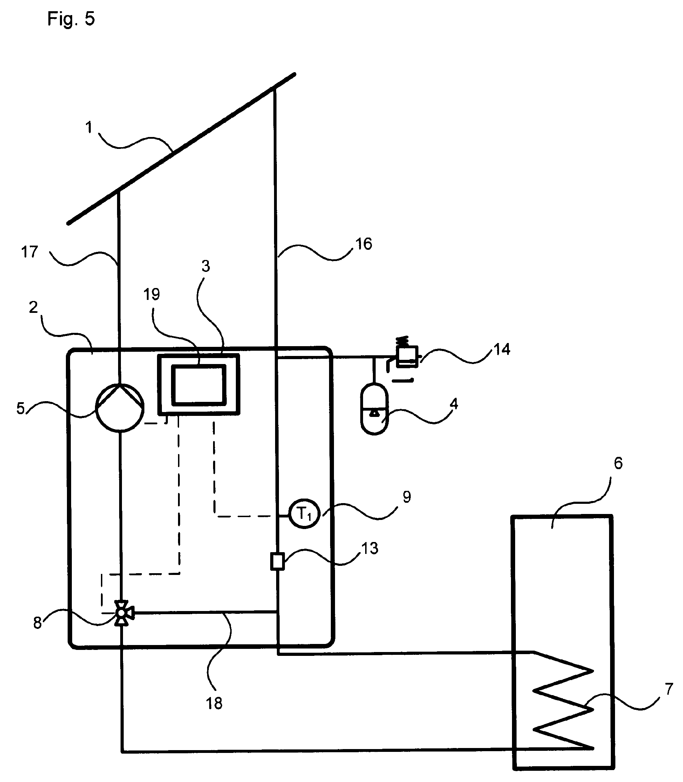

Der Figur 5 ist ein weiteres Ausführungsbeispiel der solarthermischen Anlage zu entnehmen. Diese Anlage hat nur einen Temperaturfühler 9, angeordnet in der Vorlaufleitung 16 stromab des Solarkollektors 1.

In Figuren 2-5 ist auch ein Ausdehnungsgefäß 4 mit einem Sicherheitsventil 14 dargestellt, das mit der Vorlaufleitung 16 oder der Rücklaufleitung 17 verbunden ist. Damit wird ein stabiles Druckverhalten der Solarflüssigkeit in der Anlage gewährleistet.

Bei einem bevorzugten Regelungsablauf der solarthermischen Anlage wird ein erster Kreislauf aus dem Solarkollektor 1 und der Solarstation 2 sowie ein zweiter Kreislauf aus dem Solarkollektor 1, der Solarstation 2 und dem Speicher 6 gebildet. Im Fall des ersten Kreislaufs ist die Pumpe ausgeschaltet und das Umschaltventil 8 derart geschaltet, dass das Wärmeträgermedium nur durch den Solarkollektor 1 strömt. Beim zweiten Kreislauf ist die Pumpe 5 angeschaltet und nach Erreichen einer bestimmten Vorlauftemperatur wird das Umschaltventil 8 umgeschaltet, so dass das Wärmeträgermedium auch durch den Speicher 6 strömt und eine Speicherladung erfolgen kann. Nachdem die gebildete Temperaturdifferenz zwischen der Vorlauf- und Rücklauftemperatur einen bestimmten Wert unterschritten hat, wird die Pumpe 5 ausgeschaltet. Nach einer definierten Zeit nach Abschaltung der Pumpe 5 wird das Umschaltventil 8 wieder derart geschaltet, dass die Bypassleitung 18 die Vorlaufleitung 16 mit der Rücklaufleitung 17 verbindet und die Pumpe 5 wieder angeschaltet wird.

Auch eine Drehzahlregelung der Pumpe ist an dieser Stelle denkbar. Hierzu würden verschiedene Temperaturwerte bzw. Temperaturänderungen unterschiedliche Drehzahlen der Pumpe bewirken. Somit kann eine Drehzahlregelung ergänzend zur Temperaturregelung stattfinden.

Bei weiteren denkbaren Ausführungsbeispielen z.B. bei solarthermischen Anlagen mit einer Verbindung z.B. über ein elektronisches Bus-System zu anderen solchen Anlagen fungiert die Solarstation als Hauptstation, als so genannter "Master". Genauso kann die erfindungsgemäße Solarstation als Nebenstation, als so genannter "Slave" fungieren, wenn weitere Regelungskomponenten in dem Gesamtsystem eingesetzt werden.

Mit den solarthermischen Anlage und Verfahren kann mehr Energie in den Speicher gespeichert werden, als bei der Regelung über eine Speichertemperatur, wie es bei herkömmlichen Anlagen üblich ist.

### Bezugszeichenliste

Solarkollektor (1)
Solarstation (2)
Regler (3)
Ausdehnungsgefäß (4)
Pumpe (5)
Speicher (6)
Wärmetauscher (7)
Umschaltventil (8)
Temperaturfühler Vorlauf (9)
Temperaturfühler Rücklauf (10)
Drucksensor (11)
Volumenstromfühler (12)
Mikroblasenabscheider (13)
Sicherheitsventil (14)
Entlüfter (15)
Vorlaufleitung (16)
Rücklaufleitung (17)
Bypassleitung (18)
Bedieneinheit mit Display (19)

## Patentansprüche

1. Verfahren zum Betrieb einer solarthermischen Anlage, bei dem das zu erwärmende Wärmeträgermedium mittels einer Pumpe (5) in einem Kreislauf zwischen einer Speichervorrichtung (6) und mindestens einem Solarkollektor (1) über eine Vorlauf- und eine Rücklaufleitung (16, 17) befördert wird, wobei die Vorlauf- und die Rücklaufleitung (16, 17) über ein Umschaltventil (8) und eine Bypassleitung (18) verbindbar sind, mit einem ersten Temperatursensor (9) angeordnet zwischen dem Solarkollektor (1) und dem Speicher (6) in der Vorlaufleitung (16) stromab des Solarkollektors (1) sowie einem zweiten Temperatursensor (10) in der Rücklaufleitung (17) mit folgenden Verfahrensschritten:
- vor dem Start der Pumpe (5) ist das Umschaltventil (8) derart geschaltet, dass das Wärmeträgermedium über die Vorlaufleitung (16), die Bypassleitung (18) und die Rücklaufleitung (17) zum Solarkollektor (1) strömt,
- dann wird die Pumpe gestartet,
- die mittels des ersten Temperatursensors (9) gemessene Temperatur T₁ wird erfasst,
- überschreitet die gemessene Temperatur T₁ einen vordefinierten Temperaturwert T_{L}, so wird das Umschaltventil (8) derart umgeschaltet, dass das Wärmeträgermedium vom Solarkollektor (1) zum Speicher (6) anstelle durch die Bypassleitung (18) strömt,
- eine mittels des zweiten Temperatursensors (10) gemessene Temperatur T₂ wird erfasst,
- die Differenz ΔT der erfassten Temperaturwerte T₁ und T₂ wird gebildet,
- wenn die Temperaturdifferenz ΔT kleiner eines vorgegebenen Wertes ΔT_{Stop} ist, wird die Pumpe (5) abgeschaltet,
**dadurch gekennzeichnet dass**, die die gemessenen Temperatur T₂ nach einer festgelegten Zeit t₁ erfasst wird.

2. Verfahren nach Anspruch 1, **dadurch gekennzeichnet, dass** sofort oder nach einer definierten Zeit t₂ nach Abschaltung der Pumpe (5) das Umschaltventil (8) derart geschaltet wird, dass die Bypassleitung (18) die Vorlaufleitung (16) mit der Rücklaufleitung (17) verbindet und die Pumpe (5) wieder angeschaltet wird.

## Claims

1. Method for operating a solar thermal system, wherein a heat transfer medium to be heated is transported via a pump (5) in a circuit between a storage device (6) and at least one solar collector (1) via a feed line and a return line (16, 17), wherein the feed line and the return line (16, 17) are connectable via a switching valve (8) and a bypass line (18), a first temperature sensor (9) being disposed between the solar collector (1) and the storage device (6) in the feed line (16) downstream of the solar collector (1), and a second temperature sensor (10) being disposed in the return line (17), the method comprising the following steps:
- before starting the pump (5), switching the switching valve (8) such that the heat transfer medium flows over the feed line (16), the bypass line (18) and the return line (17) to the solar collector (1),
- starting the pump,
- detecting a temperature T₁ measured using the first temperature sensor (9),
- if the measured temperature T₁ exceeds a predefined temperature value T_{L}, switching the switching valve (8) such that the heat transfer medium flows from the solar collector (1) to the storage device (6) instead of flowing through the bypass line (18),
- detecting a temperature T₂ measured using the second temperature sensor (10),
- calculating the difference ΔT between the measured temperature values T₁ and T₂,
- if the temperature difference ΔT is smaller than a predetermined value ΔT_{Stop}, switching off the pump (5), **characterized in that** the measured temperature T₂ is detected after a predetermined time t₁.

2. Method according to claim 1, **characterized by** immediately or after a defined time t₂ after the pump (5) has been switched off, switching the switching valve (8) such that the bypass line (18) connects the feed line (16) to the return line (17) and the pump (5) is switched on again.

## Revendications

1. Procédé pour le fonctionnement d'une installation thermosolaire, selon lequel on fait circuler le fluide caloporteur à chauffer en boucle au moyen d'une pompe (5) entre un réservoir (6) et au moins un collecteur solaire (1) à travers un conduit aller et un conduit retour (16, 17), par lequel les conduits aller et retour (16, 17) peuvent être reliés au moyen d'une vanne d'inversion (8) et d'une dérivation (18), comprenant un premier capteur de température (9) placé en aval entre le collecteur solaire (1) et le réservoir (6) dans le conduit aller (16) du collecteur solaire (1) ainsi qu'un second capteur de température (10) dans le conduit retour (17), procédé présentant les étapes suivantes :
. la vanne d'inversion (8) est basculée avant la mise en route de la pompe (5) pour que le fluide caloporteur passe par le conduit aller (16), la dérivation (18) et le conduit retour (17) vers le collecteur solaire (1),
. la pompe est alors mise en route,
. la température T₁ mesurée par le premier capteur de température (9) est détectée,
. lorsque la température T₁ mesurée dépasse une valeur prédéfinie T_{L}, la vanne d'inversion (8) est basculée de façon que le fluide caloporteur provenant du collecteur solaire (1) passe vers le réservoir (6) au lieu de passer par la dérivation (18),
. une température T₂ mesurée par le deuxième capteur de température (10) est détectée,
. la différence ΔT entre les températures détectées T₁ et T₂ est établie,
. lorsque la différence de température ΔT est inférieure à une valeur prédéfinie ΔT_{Stop}, la pompe (5) est arrêtée,
**caractérisé en ce que** l'on détecte la température mesurée T₂ après une durée déterminée t₁.

2. Procédé selon la revendication 1 **caractérisé en ce que** de suite ou après une durée définie t₂, après l'arrêt de la pompe (5), la vanne d'inversion (8) est actionnée de façon que la dérivation (18) relie le conduit aller (16) au conduit retour (17) et la pompe (5) est à nouveau mise dans le circuit.
